(19) Europäisches Patentamt
European Patent Office
Office européen des brevets

(11) **EP 1 730 089 B1**

(12) **EUROPEAN PATENT SPECIFICATION**

(45) Date of publication and mention
of the grant of the patent:
**04.08.2010 Bulletin 2010/31**

(21) Application number: **05707161.5**

(22) Date of filing: **03.02.2005**

(51) Int Cl.:
**C04B 28/02** (2006.01)

(86) International application number:
**PCT/EP2005/001071**

(87) International publication number:
**WO 2005/080290 (01.09.2005 Gazette 2005/35)**

(54) **GROUT ADMIXTURES FOR USE AT PRE-STRESSED CONCRETE CONSTRUCTION**

EINPRESSMÖRTELMISCHUNG ZUR VERWENDUNG BEI EINER SPANNBETONKONSTRUKTION

ADJUVANTS DE COULIS DESTINES A ETRE UTILISES DANS UNE CONSTRUCTION EN BETON PRECONTRAINT

(84) Designated Contracting States:
**CH DE ES FR GB IT LI**

(30) Priority: **20.02.2004 JP 2004045412**

(43) Date of publication of application:
**13.12.2006 Bulletin 2006/50**

(73) Proprietor: **Construction Research & Technology GmbH**
**83303 Trostberg (DE)**

(72) Inventors:
• **BABA, Yusuke,**
**Chuo-Kenkyusho, NMB Ltd.**
**Chigasaki-shi,**
**Kanagawa-ken (JP)**
• **YOKOHAMA, Kenji,**
**Chuo-Kenkyusho, NMB Ltd.**
**Chigasaki-shi,**
**Kanagawa-ken (JP)**
• **OGAWA, Hideo,**
**Chuo-Kenkyusho, NMB Ltd.**
**Chigasaki-shi,**
**Kanagawa-ken (JP)**

(56) References cited:
**EP-A- 1 426 349          WO-A-00/06516**
**WO-A-2004/087602**

• **PATENT ABSTRACTS OF JAPAN vol. 2003, no. 02, 5 February 2003 (2003-02-05) & JP 2002 285152 A (MITSUBISHI MATERIALS CORP), 3 October 2002 (2002-10-03) cited in the application**
• **PATENT ABSTRACTS OF JAPAN vol. 1999, no. 08, 30 June 1999 (1999-06-30) & JP 11 079816 A (DENKI KAGAKU KOGYO KK), 23 March 1999 (1999-03-23)**
• **PATENT ABSTRACTS OF JAPAN vol. 1999, no. 04, 30 April 1999 (1999-04-30) & JP 11 021160 A (UBE IND LTD), 26 January 1999 (1999-01-26)**

**Description**

The present invention relates to a PC grout admixture used for PC grouts of cement binders, in the fields of civil engineering and architecture. In further detail, the invention is related to a PC grout admixture used for a grout which is filled into a duct such as a sheath tube, when a structure with post-tension type pre-stressed concrete (hereafter referred to as "PC") is to be constructed.

[Background Art]

For PC grouts, the following characteristics are required in order to maintain durability of PC structures and to prevent corrosion of PC steel: that materials do not separate and bleeding does not occur; that the PC grout can be filled into a duct while maintaining good fluidity without generating a void until the filling operation is completed; that unification of the PC steel and cured concrete member is ensured; and that the PC structure has sufficient compressive strength.

PC grouts are primarily produced using an ordinary portland cement in a bag that is the most versatile type and a PC grout admixture, due to their superior on-site availability. With the requirement for PC grouts with a better filling characteristic, an admixture for nonbleeding-type PC grout consisting of a cement dispersant and an anti-separation agent is mainly used, with the aim of prevention of bleeding.

Furthermore, with the aim of reducing the number of on-site operation processes and simplifying the quality control, a premixed PC grout, wherein an ordinary portland cement, a water-reducing agent and a thickner are previously mixed as a product to be sold, is also available on the market (patent references 1 and 2). In addition, there is a report of PC grout materials wherein characteristics of cement binders are modified (patent references 3 and 4).

As PC structures have become longer and larger, the durability required for PC grouts is expected to be higher. In PC grouts which have been conventionally used, there are problems that a void between PC steel and a duct cannot be filled completely due to the insufficient fluidity of the PC grout, and that there is a void generated in the upper part of a duct due to the low filling characteristic; in addition, other problems are reported by inspections of structures, which include that PC structures deteriorate due to the generation of a void in the upper part of a duct, which is caused by the release of air from the PC grout after its filling operation, because the amount of entrained air in the PC grout is large. The void inside a duct and a cured PC grout not only induces decreases in the compressive strength and adherence, but also promotes diffusion of chloride ions, which is considered to be one of the causes of corrosion of PC steel. Accordingly, the prevention of corrosion of PC steel and maintenance of durability of PC structures become extremely difficult. However, to date no technology to overcome these problems have not yet been reported.

Meanwhile, as technologies related to PC grouts, a technology wherein generation of air bubbles during the mixture of a PC grout is suppressed by the use of a defoaming agent to solve the problem of a decrease in the compressive strength has been proposed in the field of premixed-type low-viscosity PC grout (patent reference 5). However, this technology is unable to improve the durability of PC structures in which a cement binder is used; in addition, it is disadvantageous in that the versatility as well as easiness in the on-site availability is lacking.

[Patent reference 1] JP, A, 9-32284
[Patent reference 2] Japanese Patent No. 3344170
[Patent reference 3] Japanese Patent No. 3114478
[Patent reference 4] JP, A, 2001-226164
[Patent reference 5] JP, A, 2002-285152

[Disclosure of the Invention]

[Problems to be solved by the Invention]

Thus, the problem to be solved by the invention is to provide PC grout admixtures wherein the above-mentioned various problems are solved, entrainment of air during the mixture of PC grout is prevented, the amount of void remained inside the cured PC grout and in the duct is decreased, and the durability of the PC structure is maintained for a long period.

[Means for Solving the Problem]

As a result of extensive research to solve the above-mentioned problems, the inventors of the present invention found that these problems can be solved by combining a cement dispersant at 25-70 mass%, an anti separation agent at 20-55 mass% and a defoaming agent at 10-30 mass % into a PC grout admixture, and then completed the invention after further research.

Namely, the present invention relates to a PC grout admixture for cement binders comprising a cement dispersant at 25-70 mass%, an anti separation agent at 20-55 mass% and a defoaming agent at 10-30 mass%.

The present invention further relates to the above-mentioned PC grout admixture, wherein the defoaming agent is one or more compounds selected from block polymer compounds of polyethylene oxide and polypropylene oxide, silicone compounds, mineral-oil compounds, alcohol compounds, fatty acid ester compounds and polyether compounds. The present invention further relates to the above-mentioned PC grout admixture, wherein the cement dispersant is one or more compounds selected from polycarboxylic acid polymer compounds and melamine sulfonic acid polymer compounds.

The present invention further relates to the above-mentioned PC grout admixture, wherein the viscosity of a 2-mass% aqueous solution of the anti-separation agent at 20°C is between 5,000 and 50,000 (cp).

The present invention further relates to the above-mentioned PC grout admixture comprising 25-70 mass% of a cement dispersant, 20-55 mass% of an anti-separation agent and 10-30 mass% of a defoaming agent, wherein the admixture is used for a low-viscosity PC grout having a flow-down time by a JP funnel ranging from 6 to less than 14 s.

The present invention further relates to the above-mentioned PC grout admixture, wherein the cement binder is one or more of those selected from high-early strength portland cements, blast furnace slag cements B and ordinary portland cements.

The present invention further relates to a PC grout material blended with the above-mentioned PC grout admixture and a cement binder, comprising a defoaming agent in an amount 0.04 mass% or more of the cement binder.

The present invention further relates to the use of the above-mentioned PC grout admixture for blending the PC grout admixture and a cement binder, wherein the defoaming agent is blended in an amount 0.04 mass% or more of the cement binder.

[Effects of the Invention]

By the use of the PC grout admixture according to the invention, an integrated structure with sufficient and firm adherence can be obtained without the formation of a void inside the cured PC grout and in the duct; as a result, invasion of chlorides etc. is prevented and the durability of the PC structure is significantly improved. Furthermore, different from premixed types, the PC grout admixture of the present invention can be easily used on site together with cement binders in a bag, such as ordinary portland cements, high-early strength portland cements, and blast furnace slag cements B. Thus, the admixtures of this invention are very convenient.

With the relaxation of regulations on the quality of construction materials accompanying the construction of a highly recycling-oriented society system which can coexist with environment, JIS R 5210 "Portland cement" has been amended (year 2003), and the amount of chloride ions contained in an ordinary portland cement was significantly relaxed. Accordingly, with respect to cement binders of PC grouts, a shift from ordinary portland cement to high-early strength portland cement and blast furnace slag cement B is anticipated. At present, there is no PC grout for a high-early strength portland cement and a blast furnace slag cement B which possess problems affecting the quality of PC grout significantly, compared with an ordinary portland cement. However, the use of the PC grout admixtures of the present invention realizes PC grouts with a high-early strength portland cement or a blast furnace slag cement B alone.

[Best mode for implementing the Invention]

The present invention is explained in further detail by the description of preferred embodiments of the invention.

The PC grout admixture of the present invention comprises a cement dispersant at 25-70 mass%, an anti-separation agent at 20-55% and a defoaming agent at 10-30 mass%. The content of the defoaming agent contributes to the prevention of void formation and to the improvement of durability. The content is typically 0.04 mass% or more relative to the amount of the cement binder, and more preferably 0.07 mass% or more. When the amount of the defoaming agent is too small, sufficient prevention of the entrainment of air during the mixture of PC grout becomes difficult, resulting in the formation of a void inside the cured PC grout and in the duct after the filling operation, which causes corrosion of the PC steel, insufficient adhesion between the PC steel and the duct, and a decrease in the durability of the PC structure.

A defoaming agent used in the present invention is used to prevent the mixture of entrained air during the mixture of the PC grout, and is selected from, for example, block-polymer compounds of polyethylene oxide and polypropylene oxide, silicone compounds, mineral-oil compounds, alcohol compounds, fatty acid ester compounds and polyether compounds. An example of the block-polymer compounds of polyethylene oxide and polypropylene oxide includes ADEKA PLURONIC L-61 (Asahi Denka Co., Ltd.), that of the silicone compounds includes SN-540E (San Nopco Limited), that of the mineral-oil compounds includes Adekanol LG-150 (Asahi Denka Kogyo Co., Ltd.), that of the alcohol compounds includes SN Deformer 573 (San Nopuko Limited), that of the fatty-acid-ester compounds includes Torimine DF-180 (Miyoshi Oil & Fat Co., Ltd.), and that of the polyester compounds includes SN deformer 170 (San Nopuko Limited).

A cement dispersant used in the present invention is used to improve the fluidity of a PC grout, and is selected from, for example, polycarboxylic acid polymer compounds and melamine sulfonic acid polymer compounds. Examples of the polycarboxylic acid polymer compounds are well-known such compounds, e.g., copolymers of (meth)acrylate and (meth)acrylate, which is disclosed in JP, A, 5-58694, (meta)acrylic acid copolymers having a polyalkylene glycol chain, or maleic acid copolymers having a polyalkylene glycol chain which are disclosed in JP, A, 2001-2788, and copolymers of allyl ether and maleic acid, which are disclosed in the Japanese Patent No. 2676854. An example of the melamine sulfonic acid polymer compounds includes formalin-condensate of melamine sulfonate.

With respect to the fluidity of PC grouts, no specific value is set for the flow-down time in the Standard Specification of Concrete Structures (Construction Part) established in 2002 by the Japan Society of Civil Engineers. However, according to "PC Grout & Pregrout PC Steel Construction Manual (revised edition) 2002" published by the Japan Prestressed Concrete Contractors Association, the flow-down time by a JP funnel is defined to be from 14 to 23 s for nonbleeding high-viscosity type, and from 6 to 14 s for nonbleeding low-viscosity type. In the present specification, those having a flow-down time by a JP funnel ranging from 14 to 23 s are referred to as high-viscosity type, and those ranging from 6 to less than 14 s are referred to as low-viscosity type.

An anti-separation agent used in the present invention is used to improve the filling property and anti-separation property of a PC grout. PC grouts in a 2-mass% solution having a viscosity from 5,000 to 50,000 (cp) are suitable. When the viscosity is less than 5,000 (cp), the fluidity of the PC grout improves but the filling property tends to deteriorate, and bleeding tends to occur. Conversely, when the viscosity exceeds 50,000 (cp), the fluidity of the PC grout tends to decrease. Components of anti-separation agents that can be used include cellulose polymer compounds (for example, carboxymethyl cellulose, methyl cellulose, hydroxypropyl methyl cellulose, hydroxyethyl cellulose, hydroxypropyl cellulose) or those described in JP, A, 2571729 or JP, A, 2549589.

Low-viscosity PC grouts have a flow-down time by a JP funnel ranging from 6 to less than 14 s, and it is specified that they can be used for ducts in which their filling operation is difficult, such as a duct wherein the percentage of void (the area of void) is significantly small (the percentage of void is 45% or less), a duct arranged in the horizontal direction including single strand, horizontal clamp of PC steel wires and PC steel bars. Suitable compositions of optimal admixtures used with such low-viscosity PC grouts can be obtained by limiting the content of the cement dispersant at 25-70 mass%, the anti-separation agent at 20-55 mass%, and the defoaming agent at 10-30 mass%. High-viscosity PC grouts have a flow-down time by a JP funnel ranging 14-23 s, and they can be used for most of the cases except when the use of the above-mentioned low-viscosity PC grout is necessary.

As cement binders for which the PC grout admixtures of the present invention can be used, any types that are commercially available are used regardless of the kind and brand, such as portland cement, mixed cement and ecocement; however, high-early strength portland cements, blast furnace slag cements B, and ordinary portland cements in bags which are advantageous in terms of on-site availability are preferred.

Furthermore, expanders such as aluminum oxide powder may be added to the PC grout admixtures of the present invention in addition to the above-mentioned components, in order to satisfy other performance required for the PC grouts.

[Examples]

Examples and comparative examples are given below to more specifically explain the present invention, without, however, limiting the present invention thereto.

1. Materials used for the test

As cement binders, a commercially available ordinary portland cement, high-early strength portland cements, and a blast furnace slag cement B in bags as listed in Table 1 were used. As a cement dispersant, a powdered polycarboxylic acid polymer compound or melamine sulfonic acid polymer compound was used; as an anti-separation agent, a cellulose polymer compound was used, and as a defoaming agent, compounds shown in Table 2 were used. The mixing ratio of each component is listed in Table 3.

Table 1:

| Sample | Kind of cement binder | Brand | Density (g/cm$^3$) | Specific surface area (cm$^2$/g) | Chemical composition (%) | | | | | | |
|---|---|---|---|---|---|---|---|---|---|---|---|
| | | | | | ig. loss | SiO$_2$ | Al$_2$O$_3$ | Fe$_2$O$_3$ | CaO | MgO | SO$_3$ |
| N | Ordinary portland cement | A | 3.16 | 3280 | 1.94 | 21.09 | 5.18 | 2.84 | 64.19 | 1.30 | 2.04 |
| H | High-early strength portland cement | A | 3.14 | 4520 | 1.16 | 20.44 | 4.80 | 2.69 | 65.27 | 1.18 | 3.00 |
| | | B | 3.13 | 4600 | 1.25 | 20.88 | 4.50 | 2.80 | 64.90 | 1.65 | 2.98 |
| | | C | 3.14 | 4500 | 1.08 | 20.55 | 5.02 | 2.58 | 66.03 | 1.26 | 3.13 |
| BB | Blast furnace slag cement B | A | 3.04 | 3790 | 1.79 | 25.27 | 8.44 | 1.90 | 55.88 | 3.03 | 2.17 |

Table 2:

| Sample | Kind of defoaming agent |
|---|---|
| D1 | Block-polymer compounds of polyethylene oxide and polypropylene oxide |
| D2 | Silicone compounds |
| D3 | Mineral-oil compounds |

Table 3:

| Sample | Mixing ratio of each component (mass%) Cement dispersant*[1]:Anti-separation agent:Defoaming agent |
|---|---|
| Ad-1# | 61□□□30□□□ 9 |
| Ad-2 | 25□□□55□□□20 |
| Ad-3 | 55□□□35□□□10 |
| Ad-4# | 65□□□30□□□ 5 |
| Ad-5# | 67□□□30□□□ 3 |
| Ad-6# | 30□□□64□□□ 6 |
| Ad-7# | 6□□□37□□□ 3 |
| Ad-8# | 67□□□33□□□ 0 |
| Ad-9# | 31□□□69□□□ 0 |
| Ad-10# | 61□□□39□□□ 0 |
| Ad-11 | 66□□□24□□□10 |
| Ad-12# | 71□□ 26□□□ 3 |
| Ad-13# | 73□□□27□□□ 0 |
| Ad-14 | 66□□□24a□□□10 |
| Ad-15 | 29□□□49□□□22 |

(continued)

| Sample | Mixing ratio of each component (mass%) Cement dispersant*1:Anti-separation agent:Defoaming agent |
|---|---|
| Ad-16 | 60:29:11 |
| Ad-17# | 73:17:10 |
| Ad-18# | 15:56:29 |
| Ad-19# | 72:17:11 |
| Ad-20 | 25:55:20 |
| Ad-21# | 15:65:20 |
| *1 Ad-1, 3-5, 7, 8, 10-14, 16, 17 and 19 are melamine sulfonic acid polymer compounds.<br>Ad-2, 6, 9, 15, 18, 20 and 21 are polycarboxylic acid polymer compounds.<br># Ad-1, 4-10, 12-13, 17-19 and 21 stand for illustrating the background of the invention and do not fall within the scope of the claims. | |

### 2. Method of mixing PC grout

To mix PC grout, a rotor-type grout mixer with a nominal capacity of 25 1 (number of rotation: 1,100 rpm) was used and the amount of the cement binder per 1 batch was set to be 25 kg. The temperature of the grout immediately after mixing was within 20 ± 2°C.

### 3. Test method

The PC grout was subjected to a physical property test according to the method described below. By testing each of the three types of cement binders separately, the change in the quality of a PC grout produced using them was confirmed and evaluated according to Table 4.
Table 4:

| Maximum-minimum value of flow-down time by JP funnel immediately after mixture (s) | Quality change | Symbol |
|---|---|---|
| Less than 5 s | Small | ○ |
| 5 s or longer | Large | × |

### 1) Fluidity test

In accordance with the standard "Test method for fluidity of PC grout (JSCE-F531-1999)" by the Japan Society of Civil Engineers, the fluidity was measured using a JP funnel.

### 2) Air-content test

The grout was filled into a container defined by JIS A 1174-1978 (confirmed in 1995) and the mass of the grout was measured, then the air content was obtained.

### 3) Compressive strength test

In accordance with the standard "Test method for compressive strength of PC grout (JSCE-G531-1999)" by the Japan Society of Civil Engineers, the compressive strength was measured.

### 4) Tests related to durability

### 4-1) Bleeding test

In accordance with the standard "Test method for bleeding percentage and expansion coefficient of PC grout (Polyethylene bag method) (JSCE-F532-1999)" by the Japan Society of Civil Engineers, the bleeding percentage was measured and evaluated based on Table 5.

Table 5:

| Bleeding percentage | Effect on durability | Symbol |
|---|---|---|
| 0 | Good | ○ |
| More than 0% and less than 0.3% | Relatively good | □ |
| 0.3% or greater | Bad | × |

4-2) Initial test

Using a squeezed-type grout pump, the grout was injected into a horizontally-arranged imitation duct (□125, L = 1,000 mm) made of transparent acryl, via a side inlet up to the half height of the duct with an injection rate of 5 1/min; then, the remained grout was injected into the duct while inclining the duct at 20° gradient. The duct was let to stand still at 20° gradient after injection was completed, and air bubbles generated in the upper part of the duct were observed. In the specification of the present invention, the amount of air bubbles generated in the upper part of the duct was defined as follows, and was evaluated based on Table 6.

Percentage area of void inside the duct = Area of air bubbles in the upper part of the duct / Surface area in the duct x 100 (%)

Table 6:

| Percentage area of void inside the duct | Effect on durability | Symbol |
|---|---|---|
| 0 | Good | ○ |
| More than 0% and less than 0.005% | Relatively good | □ |
| 0.005% or greater | Bad | × |

4-3) Chloride-ion penetration resistance test

In accordance with "Rapid chloride permeability test (ASTM C1202)," the chloride-ion penetration resistance of PC grout was tested and evaluated. In the specification of the present invention, the chloride-ion penetration resistance was defined as follows, and was evaluated based on Table 7.

Chloride-ion penetration resistance index = (Amount of electric charge pass in each cement binder with no defoaming agent used (C × 0%) (Comparative examples 1-4)) / (Amount of electric charge pass in the present Example) × 100 (%)

Table 7:

| Chloride-ion penetration resistance index | Effect on durability | Symbol |
|---|---|---|
| 110% or greater | Good | ○ |
| More than 100% and less than 110% | Relatively good | □ |
| 100%□□ | Bad | × |

4. Test results

Table 8 shows test results of the admixtures of the present invention suitable for high-viscosity PC grouts used for the ordinary portland cement, high-early strength portland cement, and blast furnace slag cement B (Examples 1-9). The amount of the defoaming agent used was 0.07 mass%, 0.04 mass% or 0.02 mass% relative to the cement binder in cases of ordinary portland cement, and it was 0.07 mass% or 0.02 mass% in cases of other cement binders. In addition, the admixtures of the present invention suitable for low-viscosity PC grouts were used for the ordinary portland cement (Examples 10 and 11; the amount of defoaming agent used: 0.07 mass%, 0.04 mass% or 0.02 mass% relative to the cement binder) and their test results are also shown in Table 8. For comparison, test results for the cases wherein no defoaming agent was used (Comparative examples 1-4) are also shown. As shown in Table 8, the admixtures suitable for high- and low-viscosity PC grouts according to the present invention can reduce the amount of air in the grout when used in combination with a defoaming agent, compared to those without the use of a defoaming agent, thereby significantly improving the compressive strength; when the amount of the defoaming agent was 0.04 mass% or more, generation of air bubbles in the duct after injection operation was successfully prevented. With respect to the chloride-ion penetration resistance, a chloride-ion penetration resistance index defined in this specification was larger for the cases with the defoaming agent than the cases without the defoaming agent. Thus, it was confirmed that reduction of the amount of air entrained in the PC grout by the use of the admixtures of the present invention can increase the chloride-ion penetration resistance.

Table 8:

| | Type | Cement binder C | | Amount used (C×%) | Mixing ratio of each component | PC grout admixture Defoaming agent Type | Amount used (C×%) | W/C (%) | Flow-down time by JP funnel (s) | Air content (%) | Compressive strength (Material age: 28 days) (N/mm²) | Durability Bleeding percentage | Percentage area of void inside the duct | Chloride-ion penetration resistance index |
|---|---|---|---|---|---|---|---|---|---|---|---|---|---|---|
| | | Type | Brand name | | | | | | | | | | | |
| Example 1 | High-viscosity type | | | | | Ad-1# D1 | | | 16.0 | 0.2 | 62.2 | ○ | ○ | ○ |
| Example 2 | | N | | 0.78 | | Ad-1# D2 | | | 15.8 | 0.3 | 60.8 | ○ | ○ | ○ |
| Example 3 | | | A | | | Ad-1# D3 | 0.07 | | 16.2 | 0.2 | 62.7 | ○ | ○ | ○ |
| Example 4 | | H | | 0.35 | Ad-2 D1 | | | | 16.3 | 0.3 | 75.4 | ○ | ○ | ○ |
| Example 5 | | BB | | 0.70 | Ad-3 | | | | 16.6 | 0.2 | 55.3 | ○ | ○ | ○ |
| Example 6 | | N | A | 0.80 | Ad-4# D1 | 0.04 | 42.5 | | 16.1 | 0.5 | 61.0 | ○ | ○ | ○ |
| Example 7 | | N | | 0.67 | Ad-5# D1 | | | | 15.7 | 1.7 | 55.8 | ○ | □ | □ |
| Example 8 | | H | A | 0.33 | Ad-6# | 0.02 | | | 16.9 | 2.0 | 68.2 | ○ | □ | □ |
| Example 9 | | BB | | 0.67 | Ad-7# | | | | 16.8 | 1.9 | 47.4 | ○ | □ | □ |
| Comparative example 1 | | N | | 0.71 | Ad-8 | – | | | 15.5 | 7.4 | 48.8 | ○ | × | × |

| | Type | Type | Brand | Amount used (C×%) | Mixing ratio of each component | Defoaming agent Type | Amount used (C×%) | W/C (%) | Flow-down time (s) | Air content (%) | Bleeding percentage | | | |
|---|---|---|---|---|---|---|---|---|---|---|---|---|---|---|
| Comparative example 2 | | H | A | 0.28 | Ad-9 | | 0 | | 15.6 | 8.0 | 59.2 | O | × | × |
| Comparative example 3 | | BB | | 0.63 | Ad-10 | | | | 16.1 | 6.9 | 40.0 | O | × | × |
| Example 10 | Low-viscosity type | | | 0.70 | Ad-11 | D1 | 0.07 | | 7.8 | 0.2 | 59.9 | O | O | O |
| Example 11 | | N | A | 0.67 | Ad-12# | | 0.02 | 45.0 | 8.1 | 1.5 | 53.3 | O | □ | □ |
| Comparative example 4 | | | | 0.63 | Ad-13 | - | 0 | | 7.6 | 7.1 | 48.3 | O | × | × |

*2 Included in the used amount of the PC grout admixture (Used amount of defoaming agent = Used amount of PC grout admixture × Mixing ratio of the defoaming agent).

# Ad-1, 4-10, 12-13, 17-19 and 21 stand for illustrating the background of the invention and do not fall within the scope of the claims.

Table 9 shows test results of the admixtures of the present invention suitable for low-viscosity PC grouts used with the ordinary portland cement, high-early strength portland cement and blast furnace slag cement B (Examples 12-14). Comparative Example 5 shows the results for the PC grout material identical to that used in Example 12, which was homogeneously mixed (premixed), and Comparative Example 6 shows the results for the premixed-type PC grout material (product of Brand C).

Table 9:

| | Type | Kind of PC grout material | Cement binder C Type | Brand | PC grout admixture Amount used (C×%) | Mixing ratio of each component | Defoaming agent Type | Amount used (C×%) | W/C (%) | Flow-down time by JP funnel (s) | Air content (%) | Durability Bleeding percentage | Percentage area of void inside the duct |
|---|---|---|---|---|---|---|---|---|---|---|---|---|---|
| Example 12 | Low-viscosity type | PC grout admixture | N | A | 0.70 | Ad-14 | | | | 7.8 | 0.2 | O | O |
| Example 13 | | | H | | 0.32 | Ad-15 | D1 | 0.07 | | 8.0 | 0.2 | O | O |
| Example 14 | | | BB | | 0.64 | Ad-16 | | | 45.0 | 8.3 | 0.3 | O | O |
| Comparative example 5 | | Premixed type | N | A | 0.70 | Ad-14 | | | | 6.6 | 0.3 | □ | □ |
| Comparative example 6 | | Premixed type PC grout material (Product of brand C) | - | - | - | - | - | - | | 7.5 | 0.3 | □ | □ |

*3 Included in the used amount of the PC grout admixture (Used amount of defoaming agent = Used amount of PC grout admixture × Mixing ratio of the defoaming agent).

Table 10 shows test results of the admixture of the present invention suitable for high-viscosity PC grouts used with three brands of high-early strength portland cements (Examples 15-17). Table 10 demonstrates that the admixture of the present invention used with any type of cement has stable and good fluidity immediately after the mixing up until 60 min later, showing that small fluctuations in the quality.

Table 10:

| | Type | Cement binder C | | PC grout admixture | | | Defoaming agent | | W/C (%) | Result Flow-down time by JP funnel (s) | | | Quality change |
| --- | --- | --- | --- | --- | --- | --- | --- | --- | --- | --- | --- | --- | --- |
| | | Type | Brand | Amount used (Cx%) | Mixing ratio of each component | | Type | Amount used*4 | | Immediately after | 30 min later | 60 min later | |
| Example 15 | High-viscosity type | H | A | 0.45 | Ad-20 | | D1 | 0.1 | 42.5 | 20.7 | 20.3 | 20.1 | O |
| Example 16 | | | B | | | | | | | 18.2 | 17.7 | 17.5 | |
| Example 17 | | | C | | | | | | | 16.1 | 16.5 | 17.0 | |

*4 Included in the used amount of the PC grout admixture (Used amount of defoaming agent = Used amount of PC grout admixture used × Mixing ratio of defoaming agent).

[Industrial Applicability]

The PC grout admixtures of the present invention can be used not only for an ordinary portland cement, but also for a high-early strength portland cement and a blast furnace slag cement B; in addition, they can be used as PC grouts of PC structures in which higher durability is required.

**Claims**

1.   An admixture used for a PC grout of cement binders comprising a cement dispersant at 25-70 mass%, an anti separation agent at 20-55 % and a defoaming agent at 10-30 mass%.

2.   The PC grout admixture according to claim 1, wherein the defoaming agent is one or more compounds selected from block polymer compounds of polyethylene oxide and polypropylene oxide, silicone compounds, mineral-oil compounds, alcohol compounds, fatty acid ester compounds and polyether compounds.

3.   The PC grout admixture according to at least one of claims 1 or 2, wherein the cement dispersant is one or more compounds selected from polycarboxylic acid polymer compounds and melamine sulfonic acid polymer compounds.

4.   The PC grout admixture according to at least one of claims 1 to 3, wherein the viscosity of a 2-mass% aqueous solution of the anti-separation agent at 20˚C is between 5,000 and 50,000 (cp).

5.   The PC grout admixture according to at least one of claims 1 to 4 comprising 25-70 mass% of a cement dispersant, 20-55 mass% of an anti-separation agent and 10-30 mass% of a defoaming agent, wherein the admixture is used for a low-viscosity PC grout having a flow-down time by a JP funnel ranging from 6 to less than 14 s.

6.   The PC grout admixture according to at least one of claims 1 to 5, wherein the cement binder is one or more of those selected from high-early strength portland cements, blast furnace slag cements B and ordinary portland cements.

7.   A PC grout material blended with the PC grout admixture according to at least one of claims 1 to 6 and a cement binder comprising a defoaming agent in an amount 0.04 mass% or more of the cement binder.

8.   Use of the PC grout admixture according to at least one of claims 1 to 7 for blending the PC grout admixture and a cement binder, wherein the defoaming agent is blended in an amount 0.04 mass% or more of the cement binder.

## EP 1 730 089 B1

**Patentansprüche**

1. . Beimischung zur Verwendung für ein Spannbeton-(SB-)Zementierungsmittel aus Zementbindern, umfassend ein Zementdispergiermittel mit 25-70 Massen-%, ein Antitrennmittel mit 20-55 Massen-% und einen Entschäumer mit 10-30 Massen-%.

2. . SB-Zementierungsmittelbeimischung nach Anspruch 1, wobei der Entschäumer eine oder mehrere Verbindungen ist/sind, die aus Blockpolymerverbindungen von Polyethylenoxid und Polypropylenoxid, Silikonverbindungen, Mineralölverbindungen, Alkoholverbindungen, Fettsäureesterverbindungen und Polyetherverbindungen ausgewählt ist/sind.

3. . SB-Zementierungsmittelbeimischung nach mindestens einem der Ansprüche 1 und 2, wobei das Zementdispergiermittel eine oder mehrere Verbindungen ist/sind, die aus Polycarbonsäure-Polymerverbindungen und Melaminsulfonsäure-Polymerverbindungen ausgewählt ist/sind.

4. . SB-Zementierungsmittelbeimischung nach mindestens einem der Ansprüche 1 bis 3, wobei die Viskosität einer 2%igen wässrigen Lösung (Massen-%) des Antitrennmittels bei 20˚C zwischen 5.000 und 50.000 (cp) liegt.

5. . SB-Zementierungsmittelbeimischung nach mindestens einem der Ansprüche 1 bis 4, umfassend 25-70 Massen-% eines Zementdispergiermittels, 20-55 Massen-% eines Antitrennmittels und 10-30 Massen-% eines Entschäumers, wobei die Beimischung für ein SB-Zementierungsmittel mit geringer Viskosität verwendet wird, das eine Durchlaufzeit durch einen JP-Trichter im Bereich von 6 bis weniger als 14 s aufweist.

6. . SB-Zementierungsmittelbeimischung nach mindestens einem der Ansprüche 1 bis 5, wobei der Zementbinder einer oder mehrere ist/sind, die aus frühhochfesten Portlandzementen, Zementen aus Hochofenschlacke B und herkömmlichen Portlandzementen ausgewählt ist/sind.

7. . SB-Zementierungsmittelmaterial, vermischt mit der SB-Zementierungsmittelbeimischung nach mindestens einem der Ansprüche 1 bis 6 und einem Zementbinder, umfassend einen Entschäumer in einer Menge von 0,04 Massen-% oder mehr des Zementbinders.

8. . Verwendung de r SB-Zementierungsmittelbeimischung nach mindestens einem der Ansprüche 1 bis 7 zum Vermischen d e r SB-Zementierungsmittelbeimischung und eines Zementbinders, wobei der Entschäumer in einer Menge von 0,04 Massen-% oder mehr des Zementbinders eingemischt wird.


**Revendications**

1. Adjuvant utilisé pour un coulis pour PC de liants cimentaires, comprenant un dispersant de ciment à 25 à 70 % en masse, un agent anti-séparation à 20 à 55 % en masse et un agent anti-mousse à 10 à 30 % en masse.

2. Adjuvant de coulis pour PC selon la revendication 1, dans lequel l'agent anti-mousse est un ou plusieurs composés choisis parmi les composés de polymères séquencés d'oxyde de polyéthylène et d'oxyde de polypropylène, les composés de silicone, les composés d'huiles minérales, les composés d'alcools, les composés d'esters d'acides gras et les composés de polyéthers.

3. Adjuvant de coulis pour PC selon au moins l'une quelconque des revendications 1 ou 2, dans lequel le dispersant de ciment est un ou plusieurs composés choisis parmi les composés polymères d'acide polycarboxylique et les composés polymères d'acide mélamine sulfonique.

4. Adjuvant de coulis pour PC selon au moins l'une quelconque des revendications 1 à 3, dans lequel la viscosité d'une solution aqueuse à 2 % en masse de l'agent anti-séparation à 20 ˚C est comprise entre 5 000 et 50 000 (cp).

5. Adjuvant de coulis pour PC selon au moins l'une quelconque des revendications 1 à 4, comprenant 25 à 70 % en masse d'un dispersant de ciment, 20 à 55 % en masse d'un agent anti-séparation et 10 à 30 % en masse d'un agent anti-mousse, l'adjuvant étant utilisé pour un coulis pour PC de faible viscosité ayant une durée de coulée dans un entonnoir JP allant de 6 à moins de 14 s.

EP 1 730 089 B1

6.  Adjuvant de coulis pour PC selon au moins l'une quelconque des revendications 1 à 5, dans lequel le liant cimentaire est un ou plusieurs de ceux choisis parmi les ciments Portland à résistance initiale élevée, les ciments au laitier B et les ciments Portland ordinaires.

7.  Matériau de coulis pour PC mélangé avec l'adjuvant de coulis pour PC selon au moins l'une quelconque des revendications 1 à 6 et un liant cimentaire comprenant un agent anti-mousse en une quantité de 0,04 % en masse ou plus du liant cimentaire.

8.  Utilisation de l'adjuvant de coulis pour PC selon au moins l'une quelconque des revendications 1 à 7 pour le mélange de l'adjuvant de coulis pour PC et d'un liant cimentaire, l'agent anti-mousse étant mélangé en une quantité de 0,04 % en masse ou plus du liant cimentaire.

**EP 1 730 089 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9032284 A
- JP 3344170 B
- JP 3114478 B
- JP 2001226164 A
- JP 2002285152 A
- JP 5058694 A
- JP 2001002788 A
- JP 2676854 B
- JP 2571729 A
- JP 2549589 A